# EUROPÄISCHE PATENTSCHRIFT

(11) **EP 1 852 212 B1**
(45) Veröffentlichungstag und Bekanntmachung des Hinweises auf die Patenterteilung: **09.08.2017**
(21) Anmeldenummer: 07008744.0
(22) Anmeldetag: 30.04.2007
(51) Int. Cl.: B23P 19/04, B23P 11/00, E05D 5/16, F16C 11/04, F16C 17/10, F16C 33/08, F16C 43/02, F16B 19/06

(54) **Verfahren zum Herstellung eines Gelenks, Gelenk sowie Gelenkbolzen**
Method for manufacturing a joint, joint and joint pin
Procédé de fabrication d'une articulation, articulation ansi qu'un axe d'articulation

(30) Priorität: 20.10.2006 DE 102006050463; 06.07.2006 DE 102006031616; 02.05.2006 DE 102006020601
(43) Veröffentlichungstag der Anmeldung: 07.11.2007
(60) Teilanmeldung: 10003406.5
(73) Patentinhaber: Schmidt, Heiko, 93138 Lappersdorf (DE)
(72) Erfinder: Schmidt, Heiko, 93138 Lappersdorf (DE)
(74) Vertreter: Glück Kritzenberger Patentanwälte PartGmbB

(56) Entgegenhaltungen:
- EP-A- 1 793 134
- WO-A-01/21916
- WO-A1-2007/077325
- DE-U1-202005 005 827
- US-A- 3 588 990
- US-B1- 6 238 127

## Beschreibung

Die Erfindung bezieht sich auf ein Verfahren gemäß Oberbegriff Patentanspruch 1. Ein Verfahren mit den Merkmalen des Oberbegriffs des Patentanspruchs 1 ist Gegenstand der WO 01/21916. Gelenke zwischen zwei Bauteilen oder Werkstücken sind bekannt (EP 1 793 134 A1) und werden sehr umfangreich in den verschiedensten Bereichen der Technik benötigt, u.a. auch im Automobilbau z.B. in sogenannten Gestängen beispielsweise zwischen der Fahrzeugkarosserie und einem beweglichen Karosserieelement, beispielsweise zwischen der Fahrzeugkarosserie und einer Motorhaube oder einem Kofferraumdeckel. Aber auch in anderen Bereichen der Technik werden derartige Gelenke benötigt, die in der Regel aus einer in einem Bauteil verdrehungssicher gehaltenen Gelenkbuchse und aus einem Gelenkbolzen bestehen, der mit einem Buchsenabschnitt drehbar bzw. schwenkbar in der Gelenkbuchse gelagert ist, mit einem Bolzenkopf gegen axiales Verschieben am ersten Bauteil oder an einem flanschförmigen Abschnitt der Lager- oder Gelenkbuchse anliegend gesichert ist und in dem zweiten Bauteil in geeigneter Weise, beispielsweise durch Vernieten befestigt ist.

Bekannt ist weiterhin ein Verfahren zum Herstellen einer Gelenkverbindung zwischen zwei Bauteilen (WO01/21916 A1), wobei die Gelenkverbindung u.a. eine in eine Öffnung des ersten Bauteils angeordnete Gelenkbuchse sowie einen in der Gelenkbuchse angeordneten Gelenkbolzen aufweist. Das Einbringen des Gelenkbolzens erfolgt bei vormontierter Gelenkbuchse und bei in einem Werkzeug eingespanntem erstem Bauteil in der Weise, dass ein über eine Oberflächenseite des ersten Bauteils vorstehender Rand der Gelenkbuchse durch den Kopf des in die Gelenkbuchse eingesetzten Gelenkbolzens umgelegt wird.

Bekannt ist weiterhin (US 3588990 A) Bauteile bei ihrer Herstellung durch Stanzen mit Gelenkbuchsen sowie räumlich gegen über diesen versetzt mit Bolzen zu versehen.

Bekannt ist weiterhin (DE 20 2005 005 827 U1), hülsenartige Gelenkbuchsen an einer Stirnseite mit einer Vielzahl von sich axial erstreckenden Kragenteilen auszubilden, die dann nach dem Einsetzen der Gelenkbuchse in eine Bohrung eines Bauteils zur Sicherung der Gelenkbuchse umgebogen bzw. umgelegt werden.

Aufgabe der Erfindung ist es, ein Verfahren aufzuzeigen, mit dem eine vereinfachte und besonders rationelle Herstellung solcher Gelenke oder Gelenkverbindungen möglich ist. Zur Lösung dieser Aufgabe ist ein Verfahren entsprechend dem Patentanspruch 1 ausgebildet.

Nach einem Aspekt der Erfindung erfolgt das Einbringen zumindest der jeweiligen Gelenkbuchse in das eine Bauteil des Gelenks oder der Gelenkverbindung in bzw. unter einer Presse bzw. in einem dort vorgesehen Werkzeug, welches das auch für die Herstellung des Bauteils verwendete Fertigungswerkzeug ist. Auch das Einsetzen des jeweiligen Gelenkbolzens sowie gegebenenfalls das Verbinden des Gelenkbolzens mit dem weiteren, die Gelenkverbindung bildenden Bauteil erfolgen dann in der Presse bzw. in dem dortigen Werkzeug.

Bevorzugt wird der jeweilige Gelenkbolzen nach dem Einsetzen in die Gelenkbuchse an dieser bzw. an dem einen Bauteil gegen Herausfallen gesichert, und zwar derart, dass die Drehbewegung des Gelenkbolzens in der Gelenkbuchse hierdurch nicht beeinträchtigt ist. Dieses Sichern erfolgt dann beispielsweise durch plastisches Verformen oder Verstemmen wenigstens eines Bereichs des jeweiligen Gelenkbolzens, beispielsweise in der Form, dass hierdurch ein radial über den Umfang des Gelenkbolzens weg stehender und diesen in der Gelenkbuchse gegen herausfallen sichernder Abschnitt gebildet wird. Das Sichern des jeweiligen Gelenkbolzens ist sowohl bei einem Verfahren möglich, bei dem das Einbringen der Gelenkbuchse unter bzw. in der Presse erfolgt, als auch an Arbeitsplätzen außerhalb einer Presse,

Bevorzugt erfolgt ein zumindest teilweise Fixieren der jeweiligen Gelenkbuchse durch Umlegen eines Buchsenrandes nicht durch eine weggesteuerte Bewegung der hierfür verwendeten Werkzeuge, sondern kraftgesteuert oder unter Verwendung von wenigstens einem schwimmend und/oder federnd gelagerten Werkzeug, also auf keinen Fall weggesteuert, um so Beschädigungen und/oder Deformationen der Gelenkbuchsen zu vermeiden. Hiermit wird dem Umstand Rechnung getragen, dass es sich bei den Gelenkbuchsen relativ leicht deformierbare Bauteile handelt und um dementsprechend eine unerwünschte Deformation und/oder Beschädigung dieser Gelenkbuchsen zu vermeiden. Die Verwendung zumindest eines schwimmend und/oder federnd gelagerten Werkzeugs zum zumindest vorläufigen Fixieren der Gelenkbuchsen hat insbesondere beim Durchführen des Verfahrens unter oder in einer Presse Vorteile.

Unter "Presse" ist im Sinne der Erfindung generell eine Vorrichtung zu verstehen, mit der üblicherweise die Fertigung von Bauteilen oder Werkstücken aus einem in der Regel metallischen Flachmaterial, z.B. aus Stahlblech durch Stanzen und/oder Formen erfolgt und die hierfür wenigstens zwei Werkzeugträger aufweist, von denen zumindest einer durch den Pressenantrieb relativ zu dem anderen Werkzeugträger weggesteuert zum Schließen und Öffnen der Presse bzw. des in dieser verwendeten Fertigungswerkzeugs, beispielsweise Folgewerkzeugs oder Stufenwerkzeug bewegt wird.

Folgewerkzeug im Sinne der Erfindung bedeutet das in einer Presse verwendete Fertigungswerkzeug zum Fertigen des jeweiligen Bauteils oder Werkstücks und/oder zum Einbringen von Komponenten in das Bauteil bzw. Werkstück in mehreren Arbeitsschritten und an mehreren Arbeitspositionen, wobei die Bauteile über Materialabschnitte mit einander verbunden durch das Werkzeug bzw. die Arbeitsstationen bewegt werden.

Stufenwerkzeug im Sinne der Erfindung bedeutet ein in einer Presse verwendetes Werkzeug, in welchem wiederum in mehreren Arbeitsschritten oder Stufen die Fertigung des jeweiligen Bauteils oder Werkstücks und/oder das Einbringen von Komponenten in das Bauteil bzw. Werkstück erfolgen, die einzelnen Bauteile oder Werkstücke aber nicht miteinander verbunden sind und durch eine beispielsweise von Transferbalken gebildete Förderreinrichtung durch das Werkzeug bzw. die einzelnen Arbeitspositionen oder -stufen bewegt werden. Weiterbildungen der Erfindungen ergeben sich aus den abhängigen Ansprüche. Die Erfindung wird im Folgenden anhand der Figuren an Ausführungsbeispielen näher erläutert. Es zeigen:

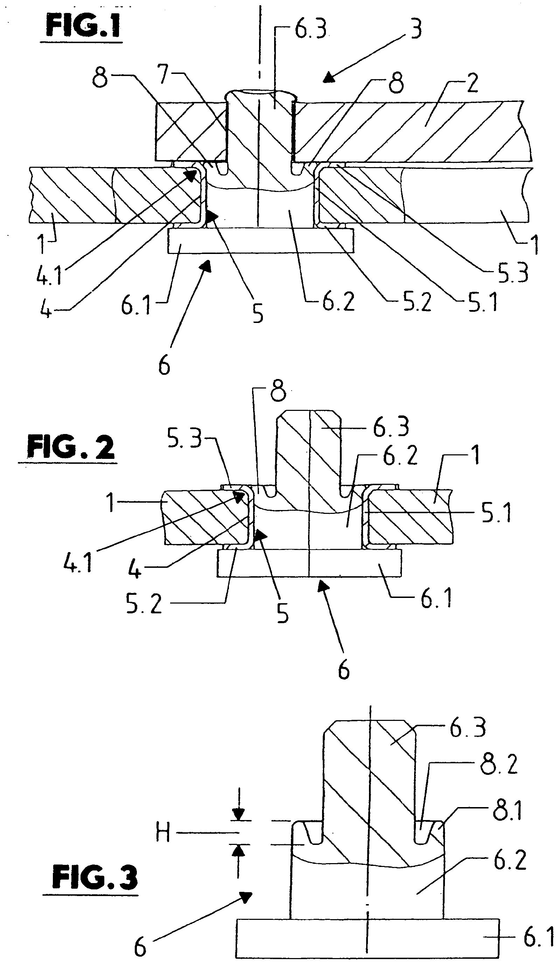

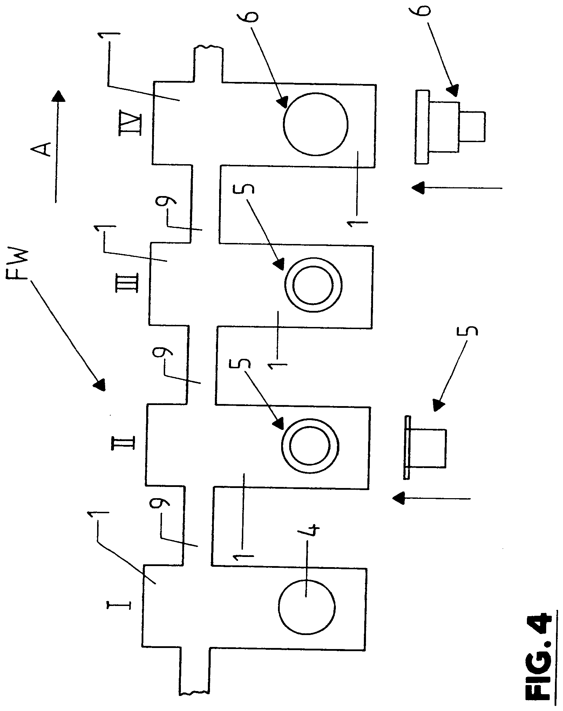

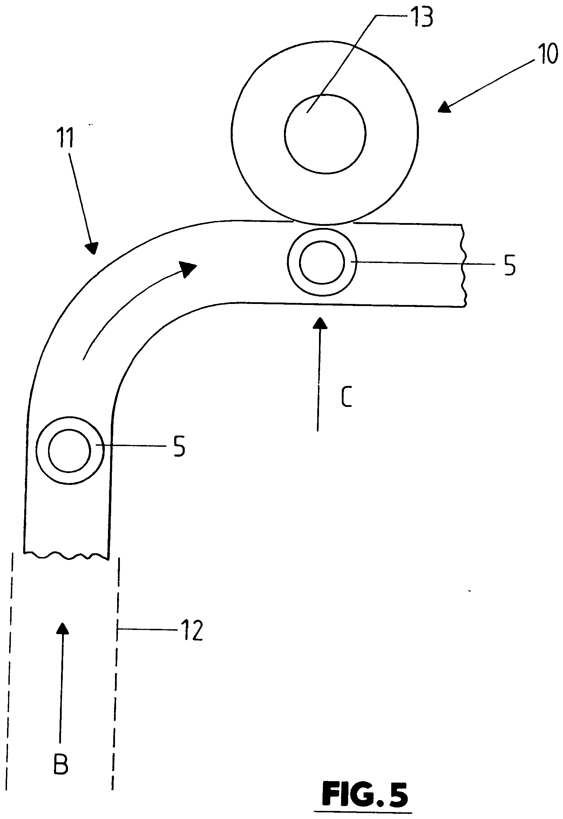

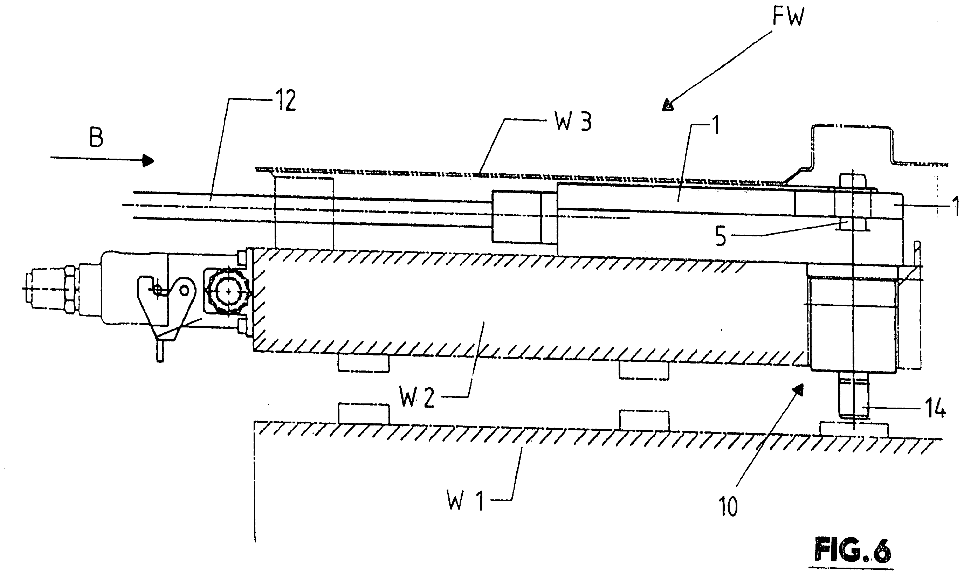

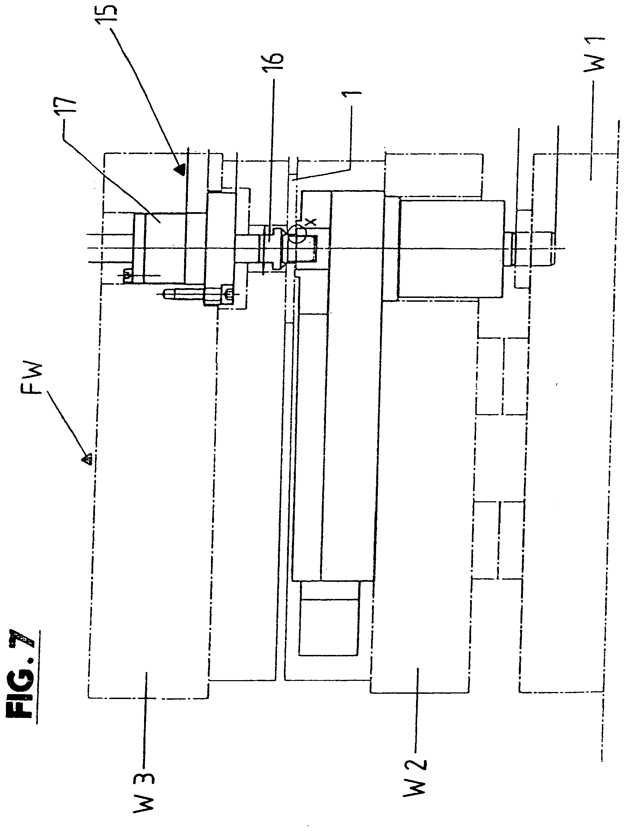

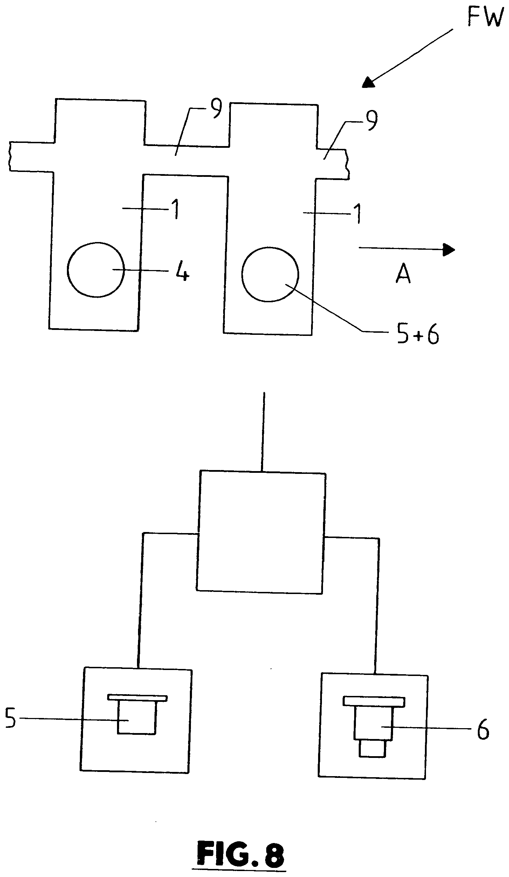

Fig. 1 in vereinfachter Darstellung ein zwischen zwei Bauteilen gebildetes Gelenk im Wesentlichen bestehend aus einer Gelenkbuchse und einem Bolzen; Fig. 2 in vereinfachter Darstellung das nach dem Fügen der Gelenkbuchse und dem Lagerbolzen erhaltene Zwischenprodukt; Fig. 3 der Gelenkbolzen in Einzeldarstellung; Fig. 4 in schematischer Darstellung den Verfahrensablauf bei der Herstellung des Gelenks der Figur 1 in einem Fügewerkzeug; Fig. 5 und 6 verschiedenen Darstellungen eines Setzkopfes zum Einbringen oder Fügen der Gelenkbuchsen; Fig. 7 in schematischer Darstellung ein Kalibrier- und Umlegewerkzeug; Fig. 8 in schematischer Darstellung den Funktionsablauf bei einem weiteren möglichen Ausführungsbeispiel;
Fig. 9 in einer schematischen Darstellung einen Schnitt durch eines der Bauteile im Bereich der Gleitlager- oder Gelenkbuchse vor dem Kalibrieren der Blech- oder Bauteildicke und nach dem Kalibrieren der Bauteil- oder Blechdicke;
Fig. 10 in Positionen a) - d) nochmals im Detail die verschiedenen Verfahrensschritte zum Kalibrieren und Fixieren der Gleitlager- oder Gelenkbuchse sowie zum Einsetzen und Sichern des Gelenkbolzens;
Fig. 11 in vereinfachter Darstellung und in Positionen a) - c) verschiedene Profile für ein Gegenwerkzeug;
Fig. 12 eine ähnliche Darstellung wie Figur 10, jedoch bei einem weiteren möglichen Ausführungsbeispiel des Verfahrens.

In der Figur 1 sind 1 und 2 zwei aus Metall, beispielsweise Stahlblech durch Stanzen und Biegen gefertigte Werkstücke oder Bauteile, die über ein Gelenk 3 miteinander verbunden sind und von denen das Bauteil 1 beispielsweise durch Stanzen aus einem metallischen Flachmaterial, beispielsweise aus Stahlblech hergestellt ist, und zwar in einem in einer Presse angeordneten Folge- oder Stufenwerkzeug. Das Bauteil 2 ist beispielsweise ein Element eines Gestänges, welches über das Gelenk 3 gelenkig mit dem Bauteil 1 verbunden ist.

Das Gelenk 3 besteht aus einer in eine Öffnung 4 des Bauteils 1 eingesetzten Gleitlager- oder Gelenkbuchse 5, die aus einem dünnen, für Gelenkbuchsen geeigneten Metall, beispielsweise aus Stahl mit einem hülsenartigen Buchsenkörper 5.1 und einem überstehenden Flansch 5.2. Die Buchse 5 ist in die Öffnung 4 derart eingesetzt, dass sie mit dem Flansch 5.2 an einer dem Bauteil 2 abgewandten Oberflächenseite des Bauteils 1 am Rand der Öffnung 4 anliegt und mit dem buchsenförmigen Abschnitt 5 in der Öffnung 4 aufgenommen ist. Zur Sicherung der Buchse 5 ist der hülsenförmige Abschnitt 5.1 an der dem flanschförmigen Abschnitt 5.2 abgewandten Ende am dortigen mit einer Fase 4.1 versehenen Rand der Öffnung 4 umgelegt, so dass die Buchse 5 einen Rand 5.3 bildet, die die seitliche Lager- und Gleitfläche für das Bauteil 2 bildet.

Das Gelenk 3 besteht weiterhin aus dem Gelenkbolzen 6, der einem Bolzenkopf 6.1 und an diesen anschließend einen Bolzenabschnitt 6.2 mit größerem Durchmesser und daran anschließend einen Bolzenabschnitt 6.3 mit reduziertem Durchmesser aufweist. Mit dem Bolzenabschnitt 6.2 ist der Gelenkbolzen 6 in der Buchse 5 aufgenommen, und zwar derart, dass der Bolzenkopf 6.1 gegen den flanschförmigen Abschnitt 5.2 anliegt. Mit dem Abschnitt 6.3 greift der Gelenkbolzen 6 in eine Öffnung 7 des Bauteils 2 ein und ist dort durch vernieten, beispielsweise in einem Taumel-Niet-Verfahren verankert.

Die Herstellung der Bauteile 1 erfolgt, wie ausgeführt, in einem in einer Arbeitsvorrichtung, beispielsweise Presse vorgesehenen Folge- oder Stufenwerkzeug, in welchem in mehreren Arbeitsschritten die Bauteile 1 beispielsweise durch Stanzen und Formen erzeugt und hierbei u.a. auch die Öffnung 4 in das jeweilige Bauteil 1 eingebracht wird. In diesem Folge- oder Stufenwerkzeug erfolgt auch das Einbringen der Buchsen 5, das Umlegen des jeweiligen Buchsenrandes 5.3, das Kalibrieren der Buchsen 5 mit einem geeigneten Kalibrier-Werkzeug oder Dorn zur Sicherstellung eines exakten Innendurchmessers der Buchsen 5, das Einsetzen des jeweiligen Gelenkbolzens 6 in eine in einem Bauteil 1 eingebrachte Buchse 5 und ein Sichern des Gelenkbolzens 6 in der jeweiligen Buchse 5, und zwar derart, dass der Gelenkbolzen 6 zwar drehbar in der jeweiligen Buchse 5 aufgenommen, gegen Herausfallen aus der Buchse 5 aber gesichert ist.

Die Figur 2 zeigt den nach diesen Verfahrensschritten erreichten Zustand, wobei das Sichern des jeweiligen Gelenkbolzens 6 bei diesem Ausführungsbeispiel durch eine geringfügige plastische Verformung (Verstemmen) des Materials des Gelenkbolzens im Bereich der Stufe zwischen den Bolzenabschnitten 6.2 und 6.3 erreicht ist, sodass der Bolzen an dieser Stufe einen leicht über den Umfang des Bolzenabschnittes 6.2 weg stehenden ringförmigen Abschnitt 8 bildet, der allerdings in der von der Fase 4.1 gebildeten Erweiterung der Buchse 5 aufgenommen ist. Bei diesem Ausführungsbeispiel liegt die dem Bolzenabschnitt 6.3 zugewandte Stirn- oder Ringfläche des Abschnitts 8 in einer Ebene mit der dem Bauteil 1 abgewandten Fläche des Buchsenrandes 5.3. Zur Bildung des Abschnitts 8 ist der Gelenkbolzen 6 entsprechend der Figur 3 beispielsweise am äußeren Rand der zwischen den Bolzenabschnitten 6.2 und 6.3, gebildeten Stufe mit einem ringförmigen Vorsprung 8.1 versehen. Der ringförmige Vorsprung 8.1 ist bei diesem Ausführungsbeispiel dadurch geformt, dass in die den Übergang zwischen den Bolzenabschnitten 6.2 und 6.3 bildende und in der Ebene senkrecht zur Bolzenlängsachse angeordnete Ringfläche eine den Bolzenabschnitt 6.3 unmittelbar umschließende ringförmige Nut 8.2 eingeformt ist.

Die Figur 4 zeigt in schematischer Darstellung nochmals den vorstehend beschriebenen Verfahrensablauf, bei dem die einzelnen, beispielsweise aus einem Stahlblech durch Biegen und Stanzen hergestellten Bauteile 1 in Richtung des Pfeils A und im Takt der Arbeitsmaschine bzw. der Presse durch die einzelnen Abschnitte des Folge- oder Stufenwerkzeugs bewegt werden. Im Werkzeugabschnitt I oder aber in mehreren Werkzeugabschnitten erfolgt die Herstellung der Bauteile 1 und die Vorlochung dieser Bauteile mit den Öffnungen 4. In dem Werkzeugabschnitt II erfolgt das Einsetzen der Buchsen in die jeweilige Öffnung 4 eines Bauteils 1. In dem Werkzeugabschnitt III erfolgt dann das Umlegen des Randes 5.3 sowie auch das Kalibrieren der jeweiligen Buchse 5. In dem Werkzeugabschnitt IV erfolgt dann schließlich das Fügen und das Sichern des jeweiligen Gelenkbolzens 6. Die Bauteile 1 sind bei ihrer Bewegung durch das Folge- oder Stufenwerkzeug bzw. durch die einzelnen Werkzeugabschnitte über Materialstege oder Materialabschnitte miteinander verbunden, wie dies in der Figur 4 schematisch mit 9 angedeutet ist. Erst am Ende der Bearbeitung im Folge- oder Stufenwerkzeug, beispielsweise erst nach dem Fügen und Sichern der Gelenkbolzen 6 werden die Bauteile 1 beispielsweise durch Freistanzen getrennt, sodass sie dann einer weiteren Verwendung zugeführt werden können, und zwar der Montage der Bauteile 2 an den Bolzenabschnitten 6.3. Dies erfolgt beispielsweise an einem Arbeitsplatz außerhalb der Presse oder aber an einem an die Presse bzw. an das Folge- oder Stufenwerkzeug außerhalb der Presse anschließenden Fertigungsautomaten.

Zum Fügen der Buchsen 5 dient ein Buchsensetzkopf, der in der Figuren 5 und 6 schematisch mit 10 angegeben ist. Diesem Buchsensetzkopf 10, der im Wesentlichen einem dem Fachmann unter der Bezeichnung "Stanzkopf" bekannten Werkzeug entspricht, bzw. einer starren Führung 11 des Buchsensetzkopfes 10 werden die Buchsen 5 von einer außerhalb des Folge- oder Stufenwerkzeugs bzw. der Presse angeordneten Versorgungseinheit über einen Schlauch 12 mit Förderluft zugeführt, und zwar entsprechend dem Pfeil B derart, dass die Buchsen 5 in der starren Führung 11 aneinander anschließend und mit ihren Buchsenachsen senkrecht zur Förderrichtung B orientiert angeordnet sind. In jedem Arbeitshub des Werkzeuges wird die an dem in Förderrichtung B vorderen Ende bereitstehende Buchse 5 aus der Führung 11 heraus in eine Bereitstellungsposition 13 bewegt, wie dies mit dem Pfeil C angedeutet ist. Aus der Bereitstellungsposition 13 wird die Buchse dann mit einem durch die Bewegung des Folge- oder Stufenwerkzeugs bzw. der Presse gesteuerten Stempel oder Plunger 14 axial in die Öffnung 4 des jeweiligen Bauteils 1 eingeschoben.

In der Figur 6 sind auch die gegenläufig bewegten Werkzeugteile W1, W2 und W3 des Folgewerkzeugs FW sowie der am Werkzeugteils W2 vorgesehene Buchsensetzkopf 10 mit dem mit dem Werkzeugteils W1 zusammenwirkenden Plunger 14 und die in das Bauteil 1 eingesetzte Buchse 5 schematisch dargestellt.

Wie die Figur 5 zeigt, weist die starre Führung 11 eine Krümmung von etwa 90° auf, und zwar in einer Ebene senkrecht zur Achsrichtung der einzelnen Buchsen und damit auch senkrecht zur Fügerichtung. Durch diese Ausbildung ist eine optimale Zuführung der Buchsen 5 an das Folge- oder Stufenwerkzeug in einer Achsrichtung quer bzw. senkrecht zur Förderrichtung A möglich.

Das Umlegen des Buchsenrandes 5.3 und das Kalibrieren der Buchsen erfolgt in dem in der Figur 7 schematisch dargestellten Kalibrier- und Umlegwerkzeug, welches ebenfalls im Folgewerkzeug FW bzw. an einem der Werkzeugteile des Folgewerkzeugs FW vorgesehen ist und im Wesentlichen aus dem Kalibrier- und Umlegstößel 16 und einem Betätigungselement 17 besteht. Während das Fügen der jeweiligen Buchse 5 beispielsweise von unten her erfolgt, erfolgt das Kalibrieren und Umlegen des Buchsenrandes mit dem Stößel 16 von oben her.

Wie oben ausgeführt, sind die Buchsen 5 dünnwandig ausgebildet und unterliegen daher bereits bei einer relativ geringen Krafteinwirkung einer unerwünschten, beispielsweise die Leichtgängigkeit des jeweiligen Gelenks beeinträchtigenden Verformung. Weiterhin treten im Folgewerkzeug nicht unerhebliche Tolleranzen u.a. hinsichtlich der Positionierung der Bauteile 1 an den Werkzeugabschnitten auf, an denen das Fügen der Buchsen 5 sowie das Kalibrieren und Umlegen des Buchsenrandes 5.3 erfolgt, d.h. am Setzkopf 10 sowie an dem Kalibrier- und Umlegewerkzeug 15. Um beim Fügen sowie auch beim Kalibrieren und Umlegen des Randes 5.3 aufgrund einer nicht völlig exakten Positionierung des jeweiligen Bauteils 1 eine auf die Buchsen ausgeübte und möglicherweise zu einer Deformierung der Buchsen führende Krafteinwirkung zu vermeiden, sind die Bewegungen der entsprechenden Werkzeuge, insbesondere auch des Plungers 14 und des Stößels 16 nicht rein Weg abhängig gesteuert, sondern das jeweilige Werkzeug richtet sich an der tatsächlichen Lage der jeweiligen Öffnung 4 bzw. der in diese eingebrachten Buchse 5 aus. Dies ist beispielsweise dadurch erreicht, dass die entsprechenden Werkzeuge insbesondere senkrecht zur Ebene des jeweiligen Bauteils 1 gefedert ausgebildet und in der Ebene des jeweiligen Bauteils 1 schwimmend gelagert oder ausgebildet sind. Hierdurch wird ein Verformen der Buchsen 5 beim Einsetzen in die Öffnungen 4 vermieden. Weiterhin werden eine ordnungsgemäße Kalibrierung sowie insbesondere auch ein gleichmäßiges Umlegen des Buchsenrandes 5.3 sowie eine Fixierung der jeweiligen Buchse 5 in der zugehörigen Öffnung 4 in optimaler Weise erreicht, sodass bei der Betätigung des jeweiligen Gelenkes 3 tatsächlich der Gelenkbolzen 6 in der Buchse 5 und nicht in unerwünschter Weise die Buchse 5 in der Öffnung 4 drehen.

Diese schwimmende Lagerung für die Werkzeuge wird beispielsweise dadurch erreicht, dass der mit der jeweiligen Buchse 5 zusammenwirkende Endabschnitt des Plungers 14 und das mit der jeweiligen Buchse 5 zusammenwirkende Ende des Stößels 16 mit dem restlichen Plunger 14 bzw. Stößel 16 gelenkig verbunden ist. Dieser mit der jeweiligen Buchse 5 unmittelbar zusammenwirkende Teil des Plungers 14 bzw. des Stößels 16 weist dann eine kurze axiale Länge auf, sodass es bei der Verarbeitung der jeweiligen Buchse 5 nicht zu einem Verkippen oder Verkanten des mit der Buchse 5 zusammenwirkenden Werkzeugabschnittes und damit nicht zu einem unerwünschten Verformen der Buchse 5 kommt. Weiterhin besitzt der mit der jeweiligen Buchse zusammenwirkende Werkzeugabschnitt ein geringes Gewicht bzw. eine geringe Masse.

Die Figur 8 zeigt sehr schematisch den Verfahrensablauf bei einem weiteren möglichen Ausführungsbeispiel der Erfindung, bei der die jeweilige Buchse 5 mit dem zugehörigen Gelenkbolzen 6 vormontiert in das jeweiligen Bauteil 1 eingesetzt wird. Entsprechend der Darstellung der Figur 8 erfolgt dies so, dass die Buchsen 5 und die Gelenkbolzen 6 jeweils gesondert in einem Vorrat bereitgestellt werden. Während des Verarbeitungsprozesses werden dann außerhalb des Folge- oder Stufenwerkzeuges jeweils eine Buchse 5 und ein Gelenkbolzen 6 zusammengeführt und in dieser Form dem entsprechenden Setzkopf zum Einsetzen der Buchsen/Gelenkbolzen-Kombination in die Öffnung 4 des betreffenden Bauteils 1 zugeführt. Beispielsweise im selben Werkzeugabschnitt des Folgewerkzeugs FW erfolgen das Umlegen des Buchsenrandes 5.3 und das Sichern des Gelenkbolzens 6 durch Verstemmen oder auf andere geeignete Weise.

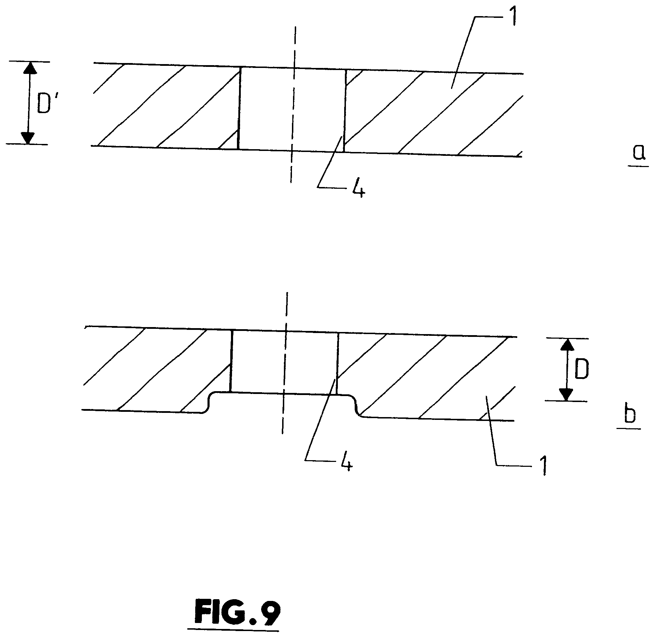

Die Figur 9 zeigt in vereinfachter Darstellung einen Schnitt durch das Bauteil 1 im Bereich der Öffnung 4, und zwar in der Position a nach dem Stanzen des Bauteils 1 und nach dem Einbringen der Öffnungen 4. Vor dem Einsetzen der Buchse 5 erfolgt bei diesem Ausführungsbeispiel des Verfahrens zunächst eine Kalibrierung der Dicke des Bauteils 1 durch ein stempelartiges Werkzeug, so dass das Bauteil 1 dann nach dem Kalibrieren zumindest im Bereich der Öffnung 4 bzw. des Gelenks 3 die erforderliche Dicke aufweist. Das Bauteil 1 wird bei diesem Verfahren somit zunächst mit der etwas größeren Dicke D' hergestellt, die dann beim Kalibrieren im Bereich der Öffnung 4 auf die Dicke D reduziert bzw. kalibriert wird. Dieses Kalibrieren erfolgt beispielsweise in einem weiteren Verfahrensschritt an einer zusätzlichen Position zwischen den Positionen I und II der Figur 4. Bei entsprechender Werkzeugausbildung kann dieses Kalibrieren aber auch z.B. in der Position I bei der Herstellung des Bauteils 1 oder in der Position II vor dem Einsetzen der jeweiligen Buchse 5 erfolgen.

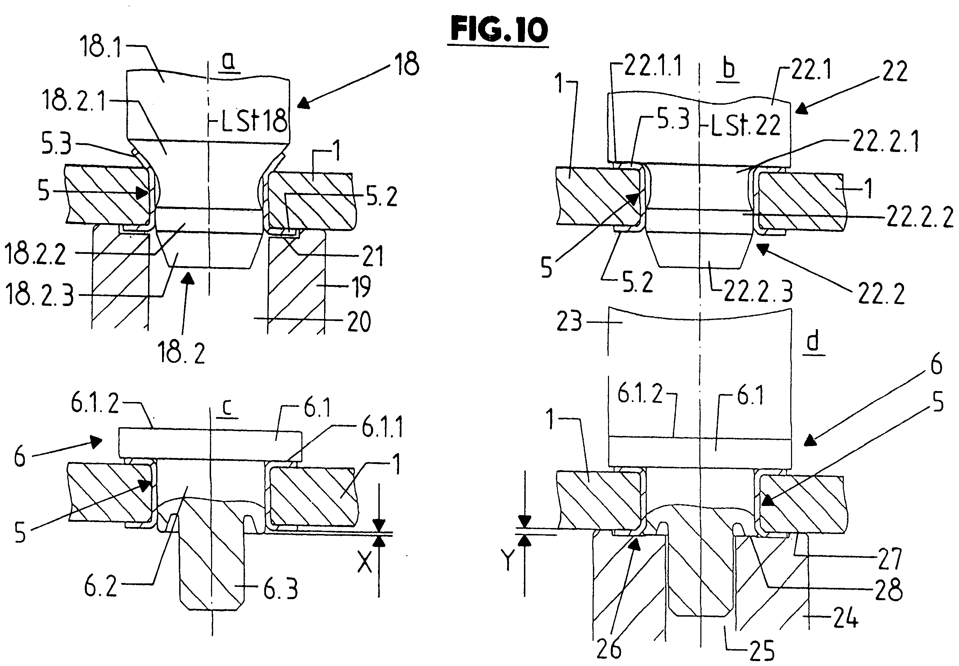

Die Figur 10 zeigt nochmals im Detail die im Zusammenhang mit der Figur 2 bereits allgemein beschriebenen Verfahrensschritte zum Einbringen der Gleitlager- oder Gelenkbuchse 5 in das Bauteil 1, zum Kalibrieren und Fixieren dieser Buchse sowie zum Einsetzen und sichern des Gelenkbolzens 6 in der Buchse. Die Position a) zeigt das Bauteil 1 zusammen mit der bereits in dieses Bauteil bzw. die Öffnung 4 eingesetzten Gelenkbuchse 5 und mit einem Kalibrier- und Umlegstößel 18, von dem die beiden Abschnitte 18.1 und 18.2 gezeigt sind und der mit dem Abschnitt 18.2 für die Kalibrierung der Buchse 5 in diese eingeführt ist, und zwar von der den umzulegenden Buchsenrand 5.3 aufweisenden Seite dieser Buchse her. Mit einem Gegenwerkzeug 19 sind das Bauteil 1 und die Gelenkbuchse 5 an dem flanschförmigen Buchsenabschnitt 5.2 abgestützt. Das matrizenartige Gegenwerkzeug 19 bildet dabei eine Öffnung 20 zur Aufnahme des Abschnittes 18.2. Die Öffnung 20 weist an ihrem dem Bauteil 1 zugewandten Öffnungsrand eine Erweiterung 21 auf, und zwar zur Aufnahme des Buchsenabschnittes 5.2. Mit dem Kalibrier- und Umlegstößel 18 erfolgt auch ein zunächst teilweises Umlegen des Buchsenrandes 5.3. Hierfür ist der Kalibrier- und Umlegstößel 18 am Abschnitt 18.2 mit einem kegelförmig sich verjüngenden Teilabschnitt 18.2.1 versehen, an den sich in Richtung zum freien Ende des Kalibrier- und Umlegstößels 18 zunächst ein im Durchmesser reduzierter, taillierter Teilabschnitt 18.2.2, daran anschließend der zur Kalibrierung des Innendurchmessers der Gleit- oder Lagerbuchse 5 dienende Teilabschnitt 18.2.3 mit kreiszylinderförmiger Außenfläche und daran anschließend der das freie Ende des Kalibrier- und Umlegstößels 18 bildende, sich kegelstumpfförmig verjüngende Teilabschnitt 18.2.4 anschließen. Sämtliche Teilabschnitte sind an ihrer Umfangsfläche rotationssymmetrisch ausgebildet und zwar achsgleich mit der Längsachse L_{St18} des Kalibrier- und Umlegstößels 18.

Das vollständige Umlegen des Buchsenrandes 5.3 erfolgt entsprechend der Position b) der Figur 10 mit einem Umlegstößel 22, der u.a. einen Stößelabschnitt 22.1 mit großem Außendurchmesser und einen das Stößelende bildenden, im Außendurchmesser reduzierten Abschnitt 22.2 aufweiset, welcher ähnlich dem Abschnitt 18.2 geformt ist, und zwar ausgehend von dem Stößelabschnitt 22.1 zum freien Ende des Umlegstößels 22 mit einem eingeschnürten bzw. taillierten Teilabschnitt 22.2.1, mit einem eine kreiszylinderförmige Außenfläche aufweisenden Teilabschnitt 22.2.2 und mit einem das freie Ende des Umlegstößels 22 bildenden und sich zu diesem Ende hin kegelstumpfförmig verjüngenden Teilabschnitt 22.2.3. Zwischen dem Abschnitt 22.1 und dem Abschnitt 22.2 ist eine ringförmige Fläche 23 gebildet, die in einer Ebene senkrecht zur Stößellängsachse L_{St22} liegt und mit der beim Einführen des Stößelabschnitts 22.2 in die Gleitlager- oder Gelenkbuchse 5 der Buchsenrand 5.3 vollständig umgelegt wird.

Auch bei diesem Verfahrensschritt sind das Bauteil 1 und die Gleit- oder Lagerbuchse 5 wiederum am Gegenwerkzeug 19 abgestützt. In einem weiteren Verfahrensschritt wird entsprechend der Position c) der Figur 10 in die im Bauteil 1 gesicherte Gleitlager- oder Gelenkbuchse 5 der Gelenkbolzen 6 eingesetzt, sodass dessen Bolzenabschnitt 6.2 in der Buchse 5 aufgenommen ist. Der Gelenkbolzen 6 ist dabei in der im Zusammenhang mit der Figur 3 beschriebenen ringförmigen Vorsprung 8.1 versehen. Der axiale Abstand, den der freie Rand des Vorsprungs 8.1 von der Ebene der den Bolzenabschnitten 6.2 und 6.3 zugewandten Seite 6.1.1 des Bolzenkopfes aufweist ist unter Berücksichtigung der Bauteiltoleranzen, d.h. insbesondere unter Berücksichtigung der Toleranzen der Dicke des Bauteils 1, der Dicke bzw. Materialstärke der Gleitlager- oder Gelenkbuchsen 5 sowie der axialen Länge des Bolzenabschnittes 6.2 mit dem Vorsprung 8.1 derart gewählt, dass dieser Vorsprung mit seinem freien Rand nach dem Einsetzen des Gelenkbolzens 6 geringfügig über die Ebene der dem Bauteil 1 abgewandten Seite des Buchsenabschnittes 5.2 vorsteht, wie dies mit dem Maß X in der Position c) angedeutet ist.

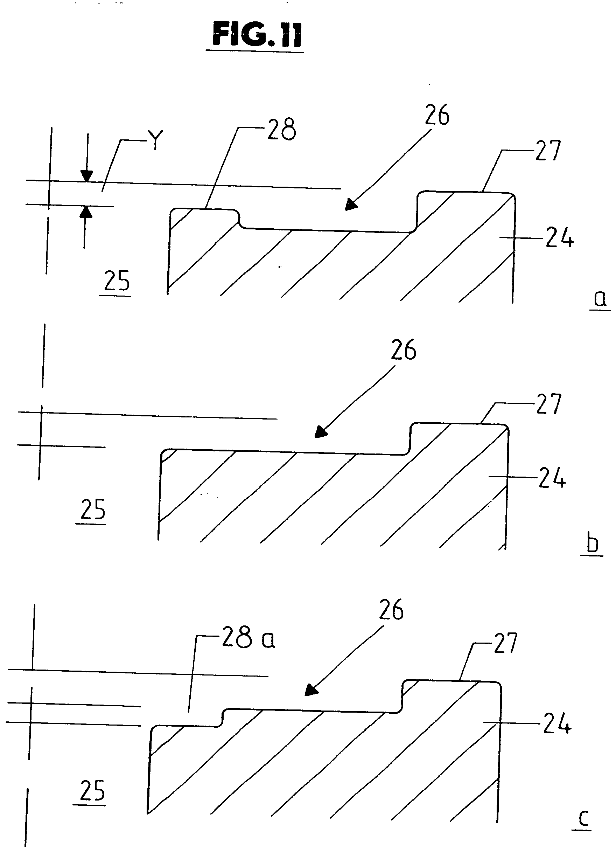

Das Sichern des Gelenkbolzens 6 in der Gleitlager- oder Gelenkbuchse 5 erfolgt durch Verstemmen bzw. durch plastisches teilweises Verformen des Vorsprunges 8.1 in der in der Position d) der Figur 10 dargestellten Weise. Hierfür wird ein Werkzeug verwendet, welches aus dem Stempel 23, der gegen den Bolzenkopf 6.1 bzw. gegen die den Bolzenabschnitten 6.2 und 6.3 abgewandte Kopfoberseite 6.1.2 anliegt, sowie aus dem matrizenartigen Gegenwerkzeug 24 besteht. Das Gegenwerkzeug 24 bildet eine Öffnung 25 zur Aufnahme des Bolzenabschnittes 6.3. Die Öffnung 25 ist an der dem Bauteil 1 zugewandten Seite, d.h. an der Anlage- oder Abstützfläche 27 des Gegenwerkzeugs 24 mit einer Erweiterung 26 versehen, und zwar derart, dass in dieser Erweiterung der Buchsenabschnitt 5.2 aufgenommen ist und so beim Verstemmen des Vorsprunges 8.1 keine oder im Wesentlichen keine Kräfte auf diesen Buchsenabschnitt ausgeübt werden, dennoch das angestrebte Verstemmen bzw. plastische Verformen des Vorsprungs 8.1 erfolgt. Hierfür ist die Erweiterung 26 an ihrem Boden mit einer die Öffnung 25 umschließenden ringförmigen Erhebung 28 versehen, die bei dem dargestellten Ausführungsbeispiel etwas gegenüber der Ebene der Anlagefläche 27 zurückversetzt ist, d.h. über die Ebene der Anlagefläche 27 nicht vorsteht, sondern von dieser Ebene um das in der Figur 10, Position d) und in der Figur 11 in der Position a) jeweils mit Y bezeichnete Maß beabstandet ist. Mit dem aus dem Stößel 23 und dem Gegenwerkzeug 24 bestehenden Werkzeug wird der Vorsprung 8.1 so verstemmt, dass der ringförmige Sicherungsabschnitt 8 gegenüber der Ebene der dem Bauteil 1 abgewandten Unterseite des Buchsenabschnittes 5.2 beabstandet ist, d.h. gegenüber dieser Ebene in Richtung zum Bolzenkopf 6.1 hin versetzt ist. Dies wird wiederum dadurch möglich, dass die Öffnung 4 mit dem abgeschrägten Bereich bzw. der Fase 4.1 versehen ist.

Wie die Figur 11 zeigt, besteht durch entsprechende Ausbildung des Gegenwerkzeugs 24 im Bereich der die Öffnung 25 umschließenden Erweiterung 26 die Möglichkeit, das Verstemmen so vorzunehmen, dass die dem Bolzenkopf 6.1 abgewandte Fläche des ringförmigen Sicherungsabschnittes 8 in einer gemeinsamen Ebene mit der dem Bauteil 1 abgewandten Unterseite des Buchsenabschnittes 5.2 liegt, wofür das Gegenwerkzeug im Bereich der Erweiterung 26 den ringartigen Vorsprung 28 nicht aufweist (Figur 11, Position b), oder aber über diese Ebene vorsteht, wofür das Gegenwerkzeug 24 im Bereich der Erweiterung 26 anstelle des Vorsprungs 28 eine die Öffnung 25 umschließende ringartige Vertiefung 28a besitzt (Figur 11, Position c)).

In jedem Fall ist aber die den Vorsprung 8.1 einschließende axiale Länge des Bolzenabschnittes 6.2 so gewählt, dass sie wenigstens gleich der Summe der Materialstärke des Bauteils 1, der doppelten Materialstärke der Leitlager- oder Gelenkbuchse 5 zuzüglich der Toleranzen des Bauteils 1 und der doppelten Wanddicke der Gleitlager- oder Gelenkbuchse 5 ist.

Da das Verstemmen nur im Bereich des Vorsprungs 8.1 erfolgen soll, ist es für die Sicherung des Gelenkbolzens 6 weiterhin ausreichend, wenn die Höhe H bzw. axiale Abmessung des Vorsprunges 8.1 mindestens gleich der Summe der Toleranzen der Dicke des Bauteils 1 sowie der doppelten Toleranz der Wanddicke der Gleitlager- oder Gelenkbuchse 5 ist, wobei in solchen Fällen in denen der durch das Verstemmen erzeugte Sicherungsabschnitt 8 zurückstehend ausgeführt ist, d.h. gegenüber der Ebene der dem Bauteil 1 abgewandten Seite des Buchsenabschnittes 5.2 zurückgesetzt ist, noch über dieses zurückstehende Maß reduziert sein kann, während dem Fall, dass der durch Verstemmen erzeugte Sicherungsabschnitt 8 über den Buchsenabschnitt 5.2 vorsteht, die Höhe H des Vorsprungs 8.1 noch um dieses überstehende Maß vergrößert ist.

Der Vorsprung 8.1 ist weiterhin in jedem Fall so ausgebildet, dass das Volumen des Überstandes X (Position C der Figur 10) nicht größer oder nicht wesentlich größer ist als der Freiraum, der für das Verstemmen des Vorsprunges 8.1 zur Verfügung steht, d.h. im Wesentlichen von der Fase 4.1 gebildet ist.

Wie insbesondere der Vergleich der Positionen c) und d) zeigt, erfolgt das Verstemmen des Vorsprunges 8.1 in jedem Fall aber so, dass dieser Vorsprung nicht auf seiner gesamten Höhe H verformt wird, sondern lediglich auf einem geringen Teil seiner Höhe, beispielsweise auf maximal 20 % seiner Höhe H im Bereich des freien Randes.

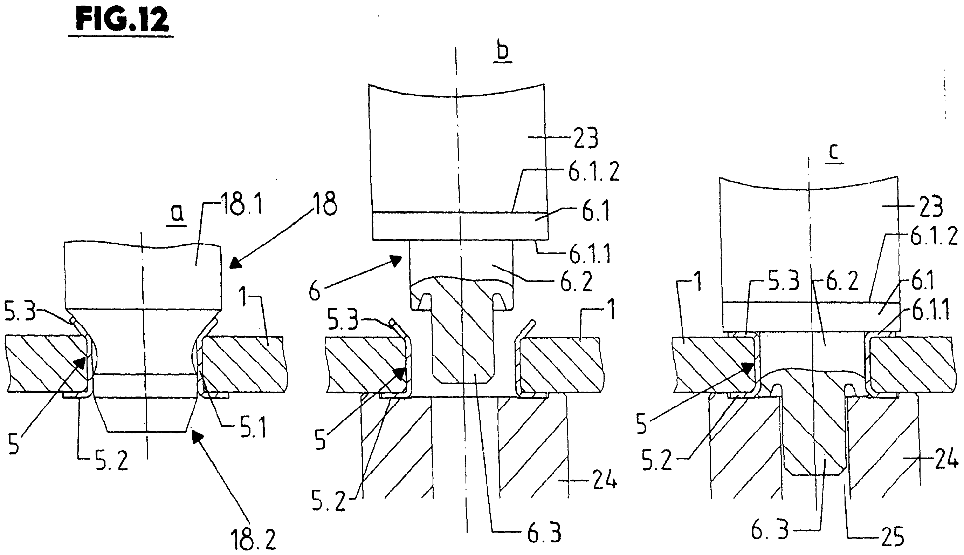

Die Figur 12 zeigt in den Positionen a) und b) ein gegenüber der Figur 10 vereinfachtes Verfahren zum Fixieren der Gleit- oder Lagerbuchse sowie zum Setzen und Sichern des Gelenkbolzens 6. Die Position a) der Figur 12 entspricht der Position a) der Figur 10, d.h. in dieser Position ist wiederum das Kalibrieren der Gleitlager- und Gelenkbuchse 5 sowie das teilweise Umlegen des Buchsenrandes 5.3 mit dem Kalibrier- und Umlegstößel 18 dargestellt.

In der Position b) sind das aus dem Stößel 23 und dem Gegenwerkzeug 24 bestehende Werkzeug zusammen mit dem Bauteil 1, der vorläufig in diesem Bauteil fixierten Gleitlager- oder Gelenkbuchse 5 und dem Gelenkbolzen 6 dargestellt. Das Umlegen des Buchsenrandes 5.3 erfolgt bei diesem Verfahren nicht durch ein gesondertes Werkzeug, d.h. nicht durch den Umlegestempel 22, sondern durch den am Stößel 23 in geeigneter Weise, beispielsweise durch Permanentmagnete, Unterdruck usw. gehaltenen Gelenkbolzen 6, der beim Einführen seines Bolzenabschnittes 23 in die Öffnung 25 des Gegenwerkzeugs 24 und beim anschließenden Verstemmen des Vorsprungs 8.1 mit dem Bolzenkopf 6.1 bzw. mit der Bolzenkopfseite 6.1.1 auch das vollständige Umlegen des Buchsenrandes 5.3 bewirkt, sodass dann wiederum der in der Position c) der Figur 11 dargestellte Zustand erreicht ist.

Das Einbringen und Fixieren der Gleitlager- oder Gelenkbuchse 5 sowie das Setzen und Sichern des Gelenkbolzens 6 erfolgt auch bei dieser Ausführungsform wiederum unter bzw. in der Presse und dabei in einem Folge- oder Stufenwerkzeug, welches auch zur Herstellung zumindest des Bauteils 1 beispielsweise durch Stanzen und Biegen dient. Wie vorstehend beschrieben, sind zumindest die zum Einsetzen, Kalibrieren und Fixieren der Gleitlager- und Gelenkbuchsen 5 dienenden Werkzeuge wiederum beweglich, d.h. schwimmend oder gefedert gelagert, sodass sich für diese Werkzeuge anstelle der weggesteuerten Bewegung der Presse eine Kraft gesteuerte Bewegung ergibt.

Die im Zusammenhang mit den Figuren 10 - 12 beschriebenen Verfahren können in bevorzugter Weise auch mit dem in der Figur 9 beschriebenen Verfahren zur Kalibrierung der Materialdicke des Bauteils 1 kombiniert werden, d.h. vor dem Setzen der jeweiligen Gleitlager- oder Gelenkbuchse erfolgt durch plastische Verformung diese Bauteildickenkalibrierung, sodass insbesondere auch beim Verstemmen der Gelenkbolzen keine durch Toleranzen bedingte Verformung der Materialdicke des Buchsenrandes 5.3 selbst bei ungefederten Verstemmwerkzeugen (Stempel 23 und Gegenwerkzeug 24) erfolgt.

Vorstehend wurde davon ausgegangen, dass die Gelenkbolzen 6 zu ihrer Sicherung einen ringartigen Vorsprung 8.1 aufweisen. Es besteht selbstverständlich auch die Möglichkeit, anstelle eines ringartigen Vorsprungs eine anders geformten Vorsprung oder auch mehrere z.B. um die Achse des Gelenkbolzens 6 verteilte Vorsprünge vorzusehen.

### Bezugszeichenliste

- 1, 2: Bauteil bzw. Werkstück
- 3: Gelenk
- 4: Öffnung
- 4.1: Fase
- 5: Gleitlager- oder Gelenkbuchse
- 5.1: hülsenartiger Buchsenabschnitt
- 5.2: flanschförmiger Buchsenabschnitt
- 5.3: umgelegter Buchsenrand
- 6: Gelenkbolzen
- 6.1: Kopf
- 6.1.1, 6.1.2: Kopfseite
- 6.2, 6.3: Bolzenabschnitt
- 7: Öffnung im Bauteil bzw. Werkstück 2
- 8: durch Verstemmen erzeugter Sicherungsabschnitt
- 8.1: Vorsprung
- 8.2: Nut
- 9: Materialsteg zwischen den Bauteilen 1
- 10: Buchsensetzkopf
- 11: starre Führung
- 12: Versorgungsschlauch
- 13: Bereitstellungsposition
- 14: Plunger
- 15: Kalibrier- und Umlegwerkzeug
- 16: Kalibrier- und Umlegstößel
- 17: Betätigungselement, beispielsweise pneumatisch oder hydraulisch betätigt
- 18: Kalibrier- und Umlegstößel
- 18.1, 18.2: Stößelabschnitt
- 18.2.1 - 18.2.3: Teilabschnitt
- 19: Gegenwerkzeug
- 20: Öffnung des Gegenwerkzeugs 19
- 21: Erweiterung der Öffnung 20
- 22: Umlegstößel
- 22.1, 22.2: Stößelabschnitt
- 22.2.1 - 22.2.3: Teilabschnitt
- 23: Stempel
- 24: Gegenwerkzeug
- 25: Öffnung des Gegenwerkzeugs 24
- 26: Erweiterung der Öffnung 25
- 27: Anlagefläche für Bauteil 1
- 28: ringförmige Erhebung zum Verstemmen des Vorsprungs 8.1
- 28a: ringförmige Vertiefung
- A: Bewegungsrichtung der Bauteile 1 im Folgewerkzeug
- B: Förderrichtung der Buchsen 5 an den Buchsensetzkopf
- C: Bewegung jeder Buchse 5 aus der starren Führung 11 in die Bereitstellungsposition 13
- L_{St18}, L_{St22}: Stößellängsachse
- X, Y: Maß bzw. Überstand
- FW: Folgewerkzeug
- W1, W2, W3: Werkzeugteil des Folgewerkzeugs
- D: kalibrierte Bauteildicke
- D': nicht kalibrierte Bauteildicke

## Patentansprüche

1. Verfahren zum Herstellen eines Gelenks (3) zwischen zwei Bauteilen (1, 2), wobei in wenigstens einer Öffnung (4) des einen Bauteils (1) eine Gelenkbuchse (5) zur Aufnahme eines Gelenkbolzens (6) vorgesehen wird, wobei an einem aus der Gelenkbuchse (5) vorstehenden Bolzenende (6.3) eines aufgenommenen Gelenkbolzens (6) das weitere Bauteil (2) befestigbar ist, **dadurch gekennzeichnet, dass** das Einbringen der Gelenkbuchse (5) in das eine Bauteil (1) in einem für die Herstellung des ersten Bauteils (1) verwendeten Fertigungswerkzeug erfolgt und das Fertigungswerkzeug ein Folge- oder Stufenwerkzeug (FW) ist, und wobei das Einbringen der Gelenkbuchse (5) in dem Folge- oder Stufenwerkzeug (FW) unter Verwendung eines schwimmend gelagerten und/oder gefederten Arbeitswerkzeugs erfolgt und/oder ein Kalibrieren der Gelenkbuchse (5) in dem Folge- oder Stufenwerkzeug (FW) unter Verwendung eines schwimmend gelagerten und/oder gefederten Arbeitswerkzeugs erfolgt und/oder ein zumindest teilweises Fixieren der Gelenkbuchse (5) durch Umlegen eines Buchsenrandes (5.3) in dem Folge- oder Stufenwerkzeug (FW) unter Verwendung eines schwimmend gelagerten und/oder gefederten Arbeitswerkzeugs erfolgt.

2. Verfahren nach Anspruch 1, **dadurch gekennzeichnet, dass** das erste Bauteil (1) durch Biegen und/oder Stanzen in dem Stufen- oder Folgewerkzeug (FW) hergestellt wird.

3. Verfahren nach Anspruch 1 oder 2, **dadurch gekennzeichnet, dass** das für die Herstellung des ersten Bauteils (1) verwendete Fertigungswerkzeug in einer zum Fertigen dieses Bauteils (1) dienenden Presse vorgesehen ist.

4. Verfahren nach einem der vorhergehenden Ansprüche, **dadurch gekennzeichnet, dass** das Fixieren der Gelenkbuchse (5) durch Umlegen des Buchsenrandes (5.3) in wenigstens zwei Schritten erfolgt, und zwar durch zunächst teilweises Umlegen in der Form, dass der Buchsenrand zumindest mit seinem freien Randbereich von dem einen Bauteil (1) wegsteht, und durch anschließendes vollständiges Umlegen in der Form, dass der Buchsenrand (5.3) gegen das eine Bauteil (1) anliegt, wobei das teilweise Umlegen durch ein Kalibrier- und Umlegwerkzeug (18) erfolgt.

5. Verfahren nach Anspruch 4, **dadurch gekennzeichnet, dass** das endgültige Umlegen durch ein Umlegwerkzeug (22) erfolgt.

6. Verfahren nach Anspruch 4, **dadurch gekennzeichnet, dass** das endgültige Umlegen des Buchsenrandes (5.3) durch den Gelenkbolzen (6) beim Setzen bzw. Einbringen dieses Bolzens in die Gelenkbuchse (5) erfolgt.

7. Verfahren nach einem der vorhergehenden Ansprüche, **dadurch gekennzeichnet, dass** die Gelenkbuchse (5) mit dem in dieser Buchse vormontierten Gelenkbolzen in das eine Bauteil (1) eingesetzt wird.

8. Verfahren nach einem der vorhergehenden Ansprüche, **dadurch gekennzeichnet, dass** die Gelenkbuchse (5) und der Gelenkbolzen jeweils eigenständig bereitgestellt und vor dem Montieren am ersten Bauteil (1) zusammengeführt werden, und zwar bevorzugt außerhalb des für die Herstellung des einen Bauteils (1) verwendeten Werkzeugs.

## Claims

1. A method for producing an articulated joint (3) between two components (1, 2), wherein a joint bushing (5) is provided in at least one opening (4) of the one component (1) for accommodating a joint bolt (6), wherein the further component (2) can be fastened on a bolt end (6.3) of an accommodated joint bolt (6), which bolt end protrudes out of the joint bushing (5), **characterized in that** the introduction of the joint bushing (5) into the one component (1) is carried out in a manufacturing tool used for the production of the first component (1) and the manufacturing tool is a progressive or multi-stage tool (FW), and wherein the introduction of the joint bushing (5) in the progressive or multi-stage tool (FW) is carried out using a work tool, which is mounted in a floating manner and/or spring-mounted, and/or a calibration of the joint bushing (5) in the progressive or multi-stage tool (FW) is carried out using a work tool, which is mounted in a floating manner and/or spring-mounted, and/or an at least partial fixing of the joint bushing (5) is carried out by folding a bushing edge (5.3) in the progressive or multi-stage tool (FW) using a work tool, which is mounted in a floating manner and/or spring-mounted.

2. The method according to Claim 1, **characterized in that** the first component (1) is produced by bending and/or punching in the multi-stage or progressive tool (FW).

3. The method according to Claim 1 or 2, **characterized in that** the progressive tool used for the production of the first component (1) is provided in a press used for manufacturing this component (1).

4. The method according to one of the preceding claims, **characterized in that** the fixing of the joint bushing (5) by folding the bushing edge (5.3) is carried out in at least two steps, specifically initially by partly folding in the manner that at least the free edge region of the bushing edge protrudes away from the one component (1), and by subsequent complete folding in the manner that the bushing edge (5.3) bears against the one component (1), wherein the partial folding takes place by means of a calibration and folding tool (18).

5. The method according to Claim 4, **characterized in that** the final folding is carried out by means of a folding tool (22).

6. The method according to Claim 4, **characterized in that** the final folding of the bushing edge (5.3) is carried out by means of the joint bolt (6) during the setting or introduction of this bolt into the joint bushing (5).

7. The method according to one of the preceding claims, **characterized in that** the joint bushing (5) is inserted into the one component (1) using the joint bolt pre-mounted in this bushing.

8. The method according to one of the preceding claims, **characterized in that** the joint bushing (5) and the joint bolt are provided independently in each case and are assembled before mounting on the first component (1), specifically preferably outside of the tool used for the production of the one component (1).

## Revendications

1. Procédé destiné à fabriquer une articulation (3) entre deux éléments de construction (1, 2), dans au moins un orifice (4) de l'un (1) des éléments de construction étant prévu un manchon d'articulation (5) destiné à réceptionner un boulon d'articulation (6), l'autre élément de construction (2) pouvant être fixé sur une extrémité de boulon (6.3) saillant hors du manchon d'articulation (5) d'un boulon d'articulation (6) réceptionné, **caractérisé en ce que** l'introduction du manchon d'articulation (5) dans l'élément de construction (1) s'effectue dans un outil de production utilisé pour fabriquer le premier élément de construction (1) et l'outil de production est un outil progressif ou un outil étagé (FW) et dans lequel l'introduction du manchon d'articulation (5) dans l'outil progressif ou outil étagé (FW) s'effectuant en utilisant un outil de travail à logement flottant et/ou à ressort et/ou un calibrage du manchon d'articulation (5) s'effectuant dans l'outil progressif ou outil étagé (FW) en utilisant un outil de travail à logement flottant et/ou à ressort et/ou une fixation au moins partielle du manchon d'articulation(5) s'effectuant en repliant un bord du manchon (5.3) dans l'outil progressif ou outil étagé (FW) en utilisant un outil de travail à logement flottant et/ou à ressort.

2. Procédé selon la revendication 1, **caractérisé en ce que** le premier élément de construction (1) est fabriqué par cintrage et/ou estampage dans l'outil progressif ou outil étagé (FW).

3. Procédé selon la revendication 1 ou 2, **caractérisé en ce que** l'outil de production utilisé pour fabriquer le premier élément de construction (1) est prévu dans une presse servant à fabriquer ledit élément de construction (1).

4. Procédé selon l'une quelconque des revendications précédentes, **caractérisé en ce que** la fixation du manchon d'articulation (5) s'effectue en repliant le bord du manchon (5.3) en au moins deux étapes et à savoir d'abord par un repliage partiel dans la forme qu'au moins pas sa zone de bordure libre, le bord du manchon déborde de l'un (1) des éléments de construction et ensuite par pliage complet dans la forme que le bord du manchon (5.3) s'applique contre l'un (1) des éléments de construction, le repliage partiel s'effectuant à l'aide d'un outil de calibrage et de repliage (18).

5. Procédé selon la revendication 4, **caractérisé en ce que** le repliage final s'effectue à l'aide d'un outil de repliage (22).

6. Procédé selon la revendication 4, **caractérisé en ce que** le repliage final du bord du manchon (5.3) s'effectue par le boulon d'articulation (6), lors du placement ou de l'introduction dudit boulon dans le manchon d'articulation (5).

7. Procédé selon l'une quelconque des revendications précédentes, **caractérisé en ce qu'**on insère le manchon d'articulation (5) avec le boulon d'articulation prémonté dans ledit manchon dans l'élément de construction (1).

8. Procédé selon l'une quelconque des revendications précédentes, **caractérisé en ce qu'**on met à disposition chaque fois de manière autonome le manchon d'articulation (5) et le boulon d'articulation et on les assemble avant le montage sur le premier élément de construction (1) et à savoir de préférence à l'extérieur de l'outil utilisé pour la production de l'un (1) des éléments de construction.
